# FASCICULE DE BREVET EUROPEEN

(11) **EP 4 139 168 B1**
(45) Date de publication et mention de la délivrance du brevet: **20.03.2024**
(21) Numéro de dépôt: 21719674.0
(22) Date de dépôt: 22.04.2021
(51) Int. Cl.: B60Q 1/14, G06T 9/00, H04L 12/40

(54) **PROCÉDÉ DE GESTION DE DONNÉES D'IMAGE ET SYSTÈME D'ECLAIRAGE DE VEHICULE**
VERFAHREN ZUR VERWALTUNG VON BILDDATEN UND FAHRZEUGBELEUCHTUNGSSYSTEM
METHOD FOR MANAGING IMAGE DATA, AND VEHICLE LIGHTING SYSTEM

(30) Priorité: 23.04.2020 FR 2004089
(43) Date de publication de la demande: 01.03.2023
(73) Titulaire: VALEO VISION, 93012 Bobigny Cedex (FR)
(72) Inventeur: ALMEHIO, Yasser, 93012 BOBIGNY - Cedex (FR); PRAT, Constantin, 93012 BOBIGNY - Cedex (FR); EL IDRISSI, Hafid, 93012 BOBIGNY - Cedex (FR)
(74) Mandataire: Valeo Visibility
(86) Numéro de dépôt international: PCT/EP2021/060608
(87) Numéro de publication internationale: WO 2021/214262

(56) Documents cités:
- CN-U- 206 884 861
- US-A1- 2020 084 854
- PRADEEP Y B: "CAN - FD and Ethernet Create Fast Reliable Automotive Data Buses for the Next Decade", INTERNET CITATION, 1 avril 2013 (2013-04-01), pages 36-43, XP002713064, Extrait de l'Internet: URL:http://www.atmel.com/ja/jp/Images/Arti cle_AC10_CAN-FD-and-Ethernet.pdf [extrait le 2013-09-17]
- Anonymous: "Video transfer through a CAN Bus - Other microcontrollers forum - Other microcontrollers - TI E2E support forums", , 1 juillet 2015 (2015-07-01), XP055756902, Extrait de l'Internet: URL:https://e2e.ti.com/support/microcontro llers/other/f/908/t/440869 [extrait le 2020-12-04]

## Description

Cette invention est liée au domaine des systèmes d'éclairage de véhicule, et plus particulièrement à la gestion des données d'image pour le contrôle de sources d'éclairage d'un véhicule.

CN 206 884 861 U (CHANGZHOU XINGYU AUTOMOTIVE LIGHTING SYSTEMS CO LTD) divulgue un procédé selon le préambule de la revendication 1.

Les systèmes d'éclairage actuels comprennent notamment des sources de lumière permettant dorénavant de projeter un faisceau lumineux haute définition. La projection souhaitée de lumière haute définition peut être obtenue par l'intermédiaire des sources de lumière et à partir d'images, ou de motifs d'image, que les sources reçoivent en vue de les afficher et ainsi projeter un faisceau lumineux donné. Ces images ou motifs d'image peuvent atteindre des résolutions très élevées maintenant, notamment en fonction de la résolution de la source de lumière utilisée. A titre d'exemple, la source de lumière peut avoir au moins 4 000 à 30 000 pixels, permettant ainsi de générer un faisceau lumineux à partir d'image de ce niveau de résolution.

Pour parvenir à générer de tels faisceau lumineux haute définition, plusieurs sources lumineuses peuvent être utilisées, voire combinées, ce qui nécessite de les contrôler et de synchroniser finement ces sources afin de fournir des fonctionnalités d'éclairage maîtrisées, variées et adaptatives.

Le véhicule embarque donc de plus en plus de sources lumineuses, qui utilisent des données d'image haute définition de plus en plus lourdes, ce qui implique une grande quantité de données qui doivent être gérées par une unité de contrôle du véhicule et communiquées via un moyen de transmission entre l'unité de contrôle et la ou les sources lumineuses. Pour ce faire par exemple, un bus de données de type protocole CAN est souvent utilisé pour transférer de telles données entre l'unité de contrôle et la source de lumière. Cependant, ces moyens de transmission de données ont pour inconvénient d'avoir une largeur de bande limitée, ne permettant pas par exemple de dépasser un débit de 2 à 5 Mbps généralement. De ce fait, des difficultés apparaissent pour transmettre sur ces réseaux limités la grande quantité de données nécessaire aux images haute définition susmentionnées. De surcroît, ces réseaux servent également à la communication d'autres données véhicule, ce qui implique que la bande passante disponible pour les données d'image haute définition peut encore varier à la baisse, par exemple en étant limité à une plage de 70 à 90% du débit maximal possible sur le réseau de transmission de données. A titre d'exemple, pour communiquer des données d'image haute définition pour la projection d'une fonction d'éclairage avec une résolution de 20 000 pixels, le débit nécessaire sur un réseau de transmission de type CAN-FD serait généralement de 10 à 12 Mbps. Or, un tel réseau CAN-FD est en réalité limité à 5 Mbps à ce jour (voire même à 2 Mbps dans la plupart des cas). Il existe donc un besoin d'optimiser les données transmises sur ces réseaux, et notamment de compresser les données communiquées afin de transmettre un flux de données d'image haute définition suffisant pour assurer la ou les fonctions d'éclairage associées, et ce tout en respectant les contraintes de débit et bande passante de ce même réseau.

Des méthodes de compression connues ont été envisagées pour palier à cette problématique. Toutefois, elles se sont toutes avérées insuffisamment efficaces par rapport à la spécificité des faisceaux de route, compromettant ainsi une réduction suffisante de la largeur de la bande passante requise par les constructeurs automobiles.

Pour y parvenir, il pourrait être prévu que plusieurs niveaux ou itérations de compression des données soient réalisés, jusqu'à réussir à respecter une largeur de bande souhaitée. Ceci étant, une telle démarche impacte très sensiblement la qualité d'affichage des fonctions d'éclairage projetées, puisque à chaque compression effectuée, la qualité d'affichage est impactée, elle est réduite.

Or, pour certaines fonctions d'éclairage, par exemple Feux de route évolutifs (connu aussi sous l'acronyme ADB pour "Adaptive Driving Beam" en langue anglaise) et marquage au sol (connu aussi sous l'acronyme RW pour "Road Writing" en langue anglaise), la qualité d'affichage ne peut être trop dégradée, sous peine de diminuer sensiblement le confort de l'utilisateur, rendre incertaines, voire inadaptées ou même illisibles des informations lumineuses projetées par le faisceau lumineux.

Une solution est donc recherchée à ces problématiques afin de palier aux inconvénients préalablement cités.

L'invention apporte une solution aux problèmes posés au moyen, selon un premier aspect de l'invention, d'un procédé de gestion de données d'image dans un système d'éclairage de véhicule, le système d'éclairage comprenant :
- au moins un module d'éclairage apte à projeter des fonctions d'éclairage à partir de données d'image compressées, et
- un bus multiplexé de type protocole CAN ou CAN-FD pour la transmission de données d'image compressées audit au moins un module d'éclairage, le procédé comprenant les étapes suivantes :
- réception d'une instruction de déclenchement d'au moins une fonction d'éclairage, ladite au moins une fonction d'éclairage étant configurée pour être générée par ledit au moins un module d'éclairage à partir de données d'image compressées correspondant à des motifs d'éclairage affichés dans une plage de fréquences donnée,
- détermination, pour la génération de l'au moins une fonction d'éclairage selon une première fréquence choisie dans ladite plage de fréquence, d'un niveau de débit requis pour transmettre les données d'image compressées sur ledit bus multiplexé,
- comparaison du niveau de débit déterminé avec une valeur seuil de débit du bus multiplexé,
- compression des données d'image de l'au moins une fonction d'éclairage selon :
   - ladite première fréquence lorsque le niveau de débit déterminé est inférieur ou égal à ladite valeur seuil de débit, et selon
   - une deuxième fréquence choisie dans ladite plage de fréquence de sorte que la deuxième fréquence est inférieure à la première fréquence, lorsque le niveau de débit déterminé est supérieur à ladite valeur seuil de débit,
- transmission audit au moins un module d'éclairage, via ledit bus multiplexé, des données d'image compressées selon l'une des première et deuxième fréquence pour génération de l'au moins une fonction d'éclairage.

Ce procédé vise ainsi à utiliser une fréquence d'affichage pour les données d'image compressées qui est dynamique, et notamment moins élevée lorsque le débit nécessaire pour transmettre ces données est supérieur aux capacités du bus de transmission de données. En limitant la fréquence d'affichage, au moins temporairement, il est alors possible de :
- diminuer le nombre de données à communiquer via le bus multiplexé (diminue le nombre d'images),
- conserver un niveau élevé de compression des données d'image tout en respectant la largeur de bande maximale autorisée,
- conserver une bonne qualité d'image, sans avoir par exemple à la dégrader par l'intermédiaire d'une nouvelle compression des données d'image déjà compressées, pour réussir à respecter le débit maximal du bus multiplexé,
- assurer la transmission de données d'image haute définition sur le bus multiplexé en ne pénalisant que temporairement la fluidité d'affichage de la fonction d'éclairage.

En l'occurrence, la limitation temporaire de la vitesse d'affichage aura un faible impact sur la fluidité d'affichage des fonctions d'éclairage. Cela ne sera pas, ou que très peu, perceptible sur des fonctions d'éclairage telles que Feux de croisement et Feux de route, et aura un impact limité sur le ressenti de confort d'utilisation de l'utilisateur des fonctions telles que Feux de route adaptatifs ADB et marquage au sol RW.

Selon un mode de réalisation avantageux, la plage de fréquences donnée est comprise entre 10 Hz et 120 Hz.

Cette plage de fréquence permet d'adresser les contraintes d'affichage de diverses fonctions d'éclairage, telles que par exemple :
- Feux de croisement (connu aussi sous l'acronyme LB pour "Low Beam" en langue anglaise),
- Feux de route (connu aussi sous l'acronyme HB pour "High Beam" en langue anglaise),
- Feux de route évolutifs ADB ou encore marquage au sol RW.

Selon un mode de réalisation avantageux, ladite première fréquence est choisie entre 50 Hz et 60 Hz et la deuxième fréquence est choisie entre 30 Hz et 40 Hz.

A titre d'exemple, pour une fonction d'éclairage telle que Feux de route évolutifs ADB ou encore marquage au sol RW, la première fréquence de 50 Hz à 60 Hz peut être utilisée pour une bonne fluidité d'affichage, et la deuxième fréquence de 30 Hz à 40 Hz peut être utilisée en vue d'une fluidité moindre permettant d'assurer la transmission de données d'image haute définition sur le bus multiplexé en cas de bande passante limitée.

Selon un mode de réalisation avantageux, la compression des données d'image de l'au moins une fonction d'éclairage est effectuée avec un taux de compression supérieur ou égal à 75%.

Une compression d'au moins 75% est un taux de compression qui permet de faire passer des données d'image d'une fonction d'éclairage haute définition, ou d'une combinaison de fonctions d'éclairage haute définition, sur des bus de transmission de véhicule de véhicule à bande passante limitée. De préférence encore, le taux de compression est supérieur ou égal à 85%.

Selon un mode de réalisation avantageux, l'au moins une fonction d'éclairage est au moins une fonction lumineuse choisie parmi feux de route, feux de route évolutifs et marquage au sol.

Selon un mode de réalisation avantageux, plusieurs fonctions d'éclairage peuvent être générées en simultané par le système d'éclairage.

Selon un mode de réalisation avantageux, suite à l'étape de compression des données d'image, lorsque les données d'image sont compressées selon la deuxième fréquence, le procédé comprend en outre des étapes de :
- détermination, pour la génération de l'au moins une fonction d'éclairage selon la deuxième fréquence, du niveau de débit requis pour transmettre les données d'image compressées sur ledit bus multiplexé,
- comparaison du niveau de débit déterminé avec la valeur seuil de débit du bus multiplexé,
- transmission audit au moins un module d'éclairage, via le bus multiplexé, des :
   - données d'image compressées selon la deuxième fréquence lorsque le niveau de débit déterminé est inférieur ou égal à ladite valeur seuil de débit, et des
   - données d'image de la dernière image transmise via le bus multiplexé lorsque le niveau de débit déterminé est supérieur à la valeur seuil de débit.

Selon ce mode de réalisation, en cas de débit insuffisant sur le bus multiplexé pour passer les données d'image compressées selon la deuxième fréquence, il est prévu de continuer à diffuser les données d'image de la dernière image affichée afin d'assurer que la source de lumière maintiendra une fonction d'éclairage, et ce pour la sécurité du conducteur et des autres usagers de la route.

Selon un deuxième aspect de l'invention, l'invention concerne également un système d'éclairage comprenant :
- au moins un module d'éclairage apte à projeter des fonctions d'éclairage à partir de données d'image compressées,
- un bus multiplexé pour la transmission de données d'image compressées audit au moins un module d'éclairage, et
- un système de commande con uré pour mettre en oeuvre le procédé de gestion de données d'image décrit précédemment.

Selon un autre mode réalisation avantageux, le système de commande comprend :
- une première unité de commande munie d'une unité de processeur configurée pour :
   - compresser des données d'image selon l'une des première et deuxième fréquence pour génération de l'au moins une fonction d'éclairage,
   - transmettre audit au moins un module d'éclairage, via ledit bus multiplexé, les données d'image compressées,
- une deuxième unité de commande munie d'une unité de processeur configurée pour :
   - recevoir des données d'image compressées transmises via ledit bus multiplexé,
   - décompresser les données d'image reçues,
   - générer l'au moins une fonction d'éclairage selon l'une des première et deuxième fréquence à partir des données d'image reçues et décompressées.

Selon un autre mode réalisation avantageux, l'au moins un module d'éclairage comprend au moins une source de lumière à semi-conducteurs, telles que des LED, et en particulier une source LED pixélisée.

Par rapport à l'éclairage à incandescence, l'éclairage à semi-conducteurs crée de la lumière visible avec une production de chaleur et une dissipation d'énergie réduites. La masse généralement faible d'un dispositif d'éclairage électronique à semi-conducteurs offre une plus grande résistance aux chocs et aux vibrations que les tubes/ampoules en verre cassant et les fils de filaments longs et fins. Ils éliminent également l'évaporation du filament, ce qui peut augmenter la durée de vie du dispositif d'éclairage. Certains exemples de ces types d'éclairage comprennent les diodes électroluminescentes (DEL ou LED pour "Light-Emitting Diode" en langue anglaise) à semi-conducteurs, les diodes électroluminescentes organiques (DELO) ou les diodes électroluminescentes à polymère (DELP) comme sources d'éclairage plutôt que les filaments électriques, le plasma ou le gaz. Les fonctions d'éclairage haute définition peuvent être assurées par projection d'un ou plusieurs faisceaux lumineux projetés par une source LED ou un ensemble de LEDs, voire par une source LED pixélisée.

Sauf définition contraire, tous les termes (y compris les termes techniques et scientifiques) utilisés dans le présent document doivent être interprétés conformément aux usages de la profession. Il sera en outre entendu que les termes d'usage courant doivent également être interprétés comme étant d'usage dans l'art concerné et non dans un sens idéalisé ou trop formel, sauf si cela est expressément défini dans le présent document.

Dans ce texte, le terme "comprend" et ses dérivés (tels que "comprenant", etc.) ne doivent pas être compris dans un sens excluant, c'est-à-dire que ces termes ne doivent pas être interprétés comme excluant la possibilité que ce qui est décrit et défini puisse inclure d'autres éléments, étapes, etc.

Pour compléter la description et pour permettre une meilleure compréhension de l'invention, un ensemble de dessins est fourni. Ces dessins font partie intégrante de la description et illustrent un mode de réalisation de l'invention, qui ne doit pas être interprétée comme limitant la portée de l'invention, mais simplement comme un exemple de la manière dont l'invention peut être réalisée. Les dessins comprennent les figures suivantes :
Fig.1 montrant un premier mode de réalisation du système d'éclairage selon l'invention.
Fig.2 montrant un deuxième mode de réalisation de ce système d'éclairage.
Fig.3 montrant un troisième mode de réalisation de ce système d'éclairage.
Fig.4 montrant une représentation des étapes du procédé de gestion de données d'image selon l'invention.
Fig.5A et Fig.5B montrant le résultat sur le taux de compression obtenu grâce au changement de fréquence lorsque le procédé conforme à l'invention est utilisé.
Fig.6 montrant un dispositif d'éclairage de véhicule qui comprend au moins une partie du système d'éclairage selon l'invention.

Sur ces figures, les références suivantes ont été utilisées :
LB Fonction d'éclairage de feux de croisement
HB Fonction d'éclairage de feux de route
ADB Fonction d'éclairage de feux de route adaptatifs
RW Fonction d'éclairage de marquage au sol
SYS Système d'éclairage
SC Système de commande
PCM Module de pilotage des fonctions d'éclairage
CAN Bus de transmission de données multiplexé
MOD Module d'éclairage
PLED, PLED1, PLED2, PLED3, PLED4 Source de lumière à semi-conducteurs UC1 Première unité de commande
UC2 Deuxième unité de commande
PROC1 Première unité de processeur
PROC2 Deuxième unité de processeur
MOD1 Premier module d'éclairage
MOD2 Deuxième module d'éclairage
REC Étape de réception d'instruction
DET Étape de détermination
COMP Étape de comparaison
IMG_DATA_COMPR Étape de compression de données d'image
TRANS Étape de transmission de données d'image compressées
FPS50 Première fréquence de compression
FPS40 Deuxième fréquence de compression
COMPR1 Premier taux de compression
COMPR2 Deuxième taux de compression
DIS Dispositif d'éclairage de véhicule de véhicule
OPT Optique d'éclairage

Les exemples de réalisations sont décrits de manière suffisamment détaillée pour permettre à ceux qui ont des compétences ordinaires dans cette technique de réaliser et de mettre en oeuvre les systèmes et les procédés décrits ici. Il est important de comprendre que les modes de réalisation peuvent être effectués sous de nombreuses formes alternatives et ne doivent pas être interprétés comme étant limités aux exemples présentés ici.

En conséquence, bien que les modes de réalisation puissent être modifiés de diverses manières et prendre diverses formes alternatives, des réalisations spécifiques de celle-ci sont montrées dans les dessins et décrites en détail ci-dessous à titre d'exemple. Il n'y a aucune intention de se limiter aux exemples particuliers divulgués. Au contraire, toutes les modifications, équivalents et alternatives entrant dans le champ d'application des revendications annexées doivent être inclus.

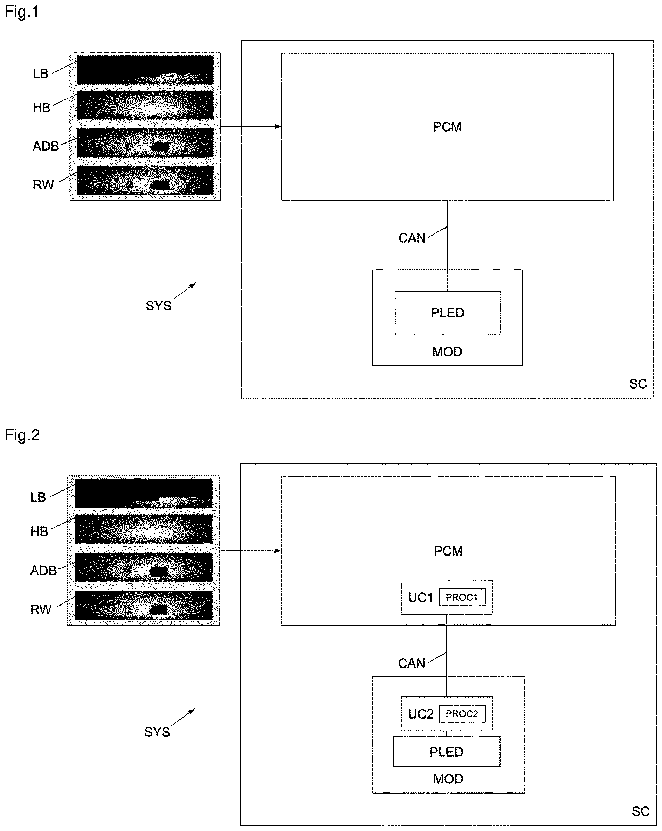

On se réfère tout d'abord à la Fig.1 qui montre un premier mode de réalisation du système d'éclairage SYS selon l'invention. Le système d'éclairage SYS comprend notamment :
- au moins un module d'éclairage MOD apte à projeter des fonctions d'éclairage à partir de données d'image compressées,
- un bus multiplexé CAN pour la transmission de données d'image compressées au module d'éclairage MOD, et
- un système de commande SC configuré pour mettre en oeuvre le procédé de gestion de données d'image proposé, en vue de générer des fonctions d'éclairage données.

A cet effet, le système de commande SC peut recevoir des instructions d'une unité de commande du véhicule (non représentée sur les figures), pour générer chacune des fonctions d'éclairage indépendamment les unes des autres, ou au contraire, en combinaison. Par exemple, les fonctions d'éclairage peuvent être combinées entre elles deux à deux. Selon un autre exemple, trois ou quatre fonctions d'éclairage peuvent être combinées entre elles, voire même l'ensemble des fonctions d'éclairage possibles.

L'unité de commande du véhicule peut générer les instructions de génération de fonctions d'éclairage à partir d'une commande d'éclairage effectuée par le conducteur, ou d'une commande d'éclairage déterminée par une unité de détection, telle qu'une caméra ou un détecteur de luminosité.

Les instructions reçues par le système de commande SC peuvent notamment être des instructions pour générer un faisceau lumineux correspondant aux fonctions d'éclairage suivantes :
- Feux de croisement LB (connu aussi sous l'acronyme LB pour "Low Beam" en langue anglaise),
- Feux de route HB (connu aussi sous l'acronyme HB pour "High Beam" en langue anglaise),
- Feux de route évolutifs ADB (connu aussi sous l'acronyme ADB pour "Adaptative Driving Beam" en langue anglaise), ou
- marquage au sol RW (connu aussi sous l'acronyme RW pour "Road Writing" en langue anglaise).

Il est entendu par Feux de route évolutifs ADB toutes fonctions d'éclairage permettant de faire varier dynamiquement le faisceau d'éclairage pour l'adapter à des situations de circulation du véhicule. Par exemple, cela peut concerner une fonction selon laquelle l'éclairage est projeté avec une photométrie de type feu de route tout en évitant l'éblouissement des autres usagers de la route. En variante ou en complément, la fonction peut concerner :
- une photométrie permettant un éclairage dynamique directionnel, autrement dit un déplacement horizontal de l'intensité maximale d'une photométrie LB ou HB en fonction de l'angle de rotation du volant d'un véhicule automobile (aussi connue sous l'acronyme DBL, pour "Dynamic Bending Light" langue anglaise) ;
- un éclairage permettant d'éviter l'éblouissement des panneaux d'affichage d'une route suite à la projection de faisceaux lumineux provenant du véhicule automobile (aussi connue sous l'acronyme TSAG pour "Traffic Sign Anti-Glare" en langue anglaise) ;
- un éclairage permettant la projection de de motif de type lignes sur la route, notamment pour délimiter une portion de route à emprunter par le véhicule automobile ou présenter une stratégie d'évitement d'obstacle (aussi connue sous l'acronyme LA pour "Line Assist" en langue anglaise).

Il est entendu par marquage au sol RW toutes fonctions d'éclairage permettant la projection sur la route de motifs visibles par le conducteur et/ou par les usagers de la route, notamment d'aides à la conduites, de sigles de signalisation ou autre indicateurs de navigation par exemple.

Le système de commande SC peut comprendre en outre un module de pilotage PCM de sources lumineuses du véhicule, apte à recevoir les instructions de génération de fonctions d'éclairage et à contrôler les sources lumineuses du véhicule de sorte à générer le faisceau lumineux attendu pour la fonction d'éclairage demandée. Pour ce faire, le module de pilotage PCM peut notamment être en interface avec le bus multiplexé CAN pour transmettre les données d'image nécessaires au module d'éclairage MOD afin de projeter les fonctions d'éclairage souhaitées.

Le bus multiplexé peut être choisi parmi n'importe quel bus de transmission de données connu dans le domaine des véhicules, et en particulier un bus de données de type protocole CAN ou CAN-FD.

Pour générer des faisceaux lumineux associés à des fonctions d'éclairage à déclencher, le module d'éclairage MOD comprend au moins une source de lumière, et en particulier une source de lumière à semi-conducteurs PLED, telles que des LED, et en particulier une source LED pixélisée.

De cette manière, le système d'éclairage SYS est apte à faire projeter des faisceaux lumineux par la source de lumière PLED à partir de données d'image compressées reçues via le bus multiplexé CAN. En outre, le système d'éclairage SYS vise à compresser les données d'image par l'intermédiaire du système de commande SC, par exemple au niveau du module de pilotage PCM, selon les fonctions d'éclairage souhaitées et de la mise en oeuvre du procédé de gestion de données d'image proposé.

On se réfère maintenant à la Fig.2 qui montre un deuxième mode de réalisation du système d'éclairage SYS, dans lequel le système de commande SC comprend en outre :
- une première unité de commande UC1 (par exemple intégrée au module de pilotage PCM) munie d'une unité de processeur PROC1 configurée pour :
   - compresser des données d'image de fonctions d'éclairage HB,ADB,RW,
   - transmettre au module d'éclairage MOD, via le bus multiplexé CAN, les données d'image compressées,
- une deuxième unité de commande UC2 (par exemple intégrée au module d'éclairage MOD) munie d'une unité de processeur PROC2 configurée pour :
   - recevoir des données d'image compressées transmises via ledit bus multiplexé CAN,
   - décompresser les données d'image reçues,
   - générer l'au moins une fonction d'éclairage HB,ADB,RW à partir des données d'image reçues et décompressées.

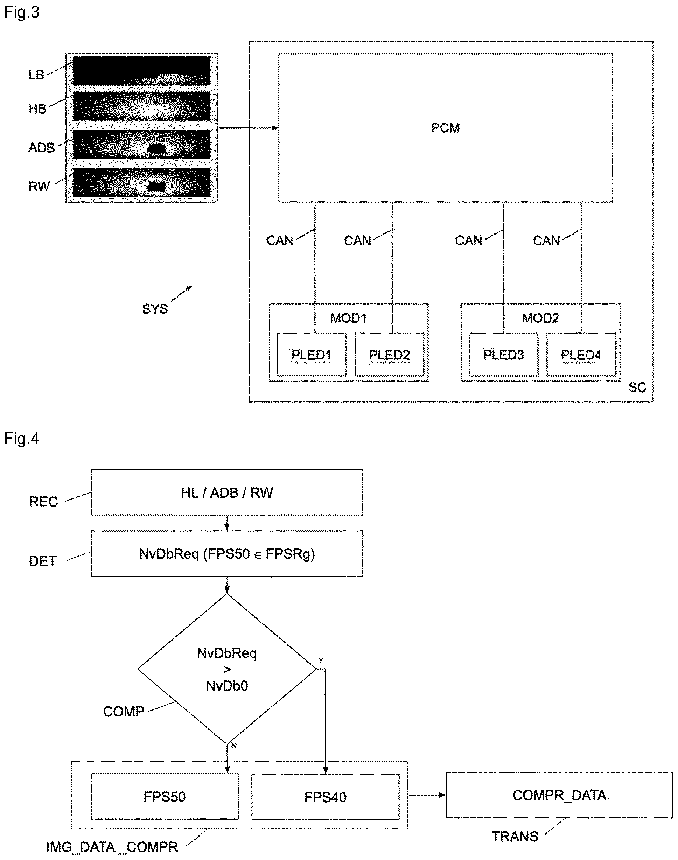

On se réfère maintenant à la Fig.3 qui montre un troisième mode de réalisation du système d'éclairage SYS dans lequel le système de commande SC comporte un premier module MOD1 et un deuxième module MOD2 d'éclairage, qui peuvent être configurés pour être :
- intégrés chacun dans un projecteur différent du véhicule, par exemple le premier module MOD1 dans le projecteur droit du véhicule et le deuxième module MOD2 dans le projecteur gauche du véhicule ;
- intégrés dans un même projecteur de véhicule.

En outre, chaque module MOD1 et MOD2 peut comprendre une pluralité de sources lumineuses PLED1, PLED2, PLED3, PLED4 pour permettre de générer les faisceaux lumineux des fonctions d'éclairage souhaitées LB, HB, ADB, RW. Les sources lumineuses PLED1, PLED2, PLED3, PLED4 peuvent en particulier être des sources de lumière à semi-conducteurs PLED, telles que des LED, et en particulier des sources LED pixélisées, par exemple ayant une résolution de 2 500, 4 000 ou 20 000 pixels.

Pour la compression des données d'image, le taux de compression souhaité est de préférence supérieur ou égal à 75%, voire de préférence encore supérieur ou égal à 85%. En effet, une compression d'au moins 75% est un taux de compression qui permet de faire passer des données d'image d'une fonction d'éclairage haute définition, ou d'une combinaison de fonctions d'éclairage haute définition, sur des bus de transmission de véhicule de véhicule à bande passante limitée, tel que le bus multiplexé CAN.

On se réfère maintenant à la Fig.4 qui montre une représentation des étapes du procédé de gestion de données d'image selon l'invention. Le procédé comprend notamment les étapes suivantes :
- réception (étape REC) d'une instruction de déclenchement d'au moins une fonction d'éclairage HB,ADB,RW, l'au moins une fonction d'éclairage HB,ADB,RW étant configurée pour être générée par l'au moins un module d'éclairage MOD à partir de données d'image compressées correspondant à des motifs d'éclairage affichés dans une plage de fréquences donnée FPSRg,
- détermination (étape DET), pour la génération de l'au moins une fonction d'éclairage HB,ADB,RW selon une première fréquence FPS50 choisie dans la plage de fréquence FPSRg, d'un niveau de débit requis NvDbReq pour transmettre les données d'image compressées sur le bus multiplexé CAN,
- comparaison (étape COMP) du niveau de débit NvDbReq déterminé avec une valeur seuil de débit NvDb0 du bus multiplexé CAN,
- compression (étape IMG_DATA_COMPR) des données d'image de l'au moins une fonction d'éclairage HB,ADB,RW selon :
   - la première fréquence FPS50 lorsque le niveau de débit NvDbReq déterminé est inférieur ou égal (sortie N de l'étape COMP) à la valeur seuil de débit NvDbO, et selon
   - une deuxième fréquence FPS40 choisie dans la plage de fréquence FPSRg de sorte que la deuxième fréquence FPS40 est inférieure à la première fréquence FPS50, lorsque le niveau de débit NvDbReq déterminé est supérieur (sortie Y de l'étape COMP) à la valeur seuil de débit NvDbO,
- transmission (étape TRANS) au module d'éclairage MOD, via le bus multiplexé CAN, des données d'image compressées COMPR_DATA selon l'une des première FPS50 et deuxième fréquence FPS40 pour génération de l'au moins une fonction d'éclairage HB,ADB,RW.

La fréquence d'affichage des données d'image compressées est ainsi pilotée dynamiquement. Cette gestion dynamique de la fréquence d'affichage permet notamment d'adapter le taux de compression des données d'image pour qu'elles puissent être convenablement transmises via le bus multiplexé CAN.

La plage de fréquences donnée FPSRg peut notamment être comprise entre 10 Hz et 120 Hz. Cette plage de fréquences FPSRg peut également être exprimée en nombre d'image par seconde, aussi nommée FPS pour "Frame Per Second" en langue anglaise, ce qui revient à dire que la plage de fréquences donnée FPSRg peut être comprise entre 10 FPS et 120 FPS.

Cette plage de fréquence FPSRg permet d'adresser les contraintes d'affichage de diverses fonctions d'éclairage, telles que par exemple :
- Feux de croisement LB (connu aussi sous l'acronyme LB pour "Low Beam" en langue anglaise),
- Feux de route HB (connu aussi sous l'acronyme HB pour "High Beam" en langue anglaise),
- Feux de route évolutifs ADB (connu aussi sous l'acronyme ADB pour "Adaptative Driving Beam" en langue anglaise), ou
- marquage au sol RW (connu aussi sous l'acronyme RW pour "Road Writing" en langue anglaise).

En particulier, la première fréquence peut être choisie entre 50 Hz et 60 Hz (ce qui équivaut à 50 à 60 FPS) et la deuxième fréquence peut être choisie entre 30 Hz et 40 Hz (ce qui équivaut à 30 à 40 FPS).

A titre d'exemple, pour une fonction d'éclairage telle que Feux de route évolutifs ADB ou encore marquage au sol RW, la première fréquence de 50 Hz à 60 Hz (50 à 60 FPS) peut être utilisée pour une bonne fluidité d'affichage, et la deuxième fréquence de 30 Hz à 40 Hz (30 à 40 FPS) peut être utilisée en vue d'une fluidité moindre permettant toutefois d'assurer la transmission de données d'image haute définition sur le bus multiplexé CAN.

Pour la compression des données d'image assurée à l'étape IMG_DATA_COMPR, que ce soit selon la première fréquence FPS50 ou la deuxième fréquence FPS40, le taux de compression souhaité est de préférence supérieur ou égal à 75%. En effet, une compression d'au moins 75% est un taux de compression qui permet de faire passer des données d'image d'une fonction d'éclairage haute définition, ou d'une combinaison de fonctions d'éclairage haute définition, sur des bus de transmission de véhicule à bande passante limitée, tel que le bus multiplexé CAN.

A l'étape de compression IMG_DATA_COMPR, en fonction de l'instruction de déclenchement de fonction d'éclairage reçue, les données d'image compressées peuvent être :
- celles d'une seule et même fonction d'éclairage, notamment choisie parmi feux de route HB, feux de route évolutifs ADB et marquage au sol RW,
- celles issues de la combinaison de plusieurs fonctions d'éclairage, comme par exemple la combinaison de feux de route évolutifs ADB et marquage au sol RW.

Par ailleurs, à l'étape de compression des données d'image IMG_DATA_COMPR, lorsque les données d'image sont compressées selon la deuxième fréquence FPS40,
le procédé peut comprendre en outre des étapes supplémentaires (non illustrées sur les figures) de :
- détermination, pour la génération de l'au moins une fonction d'éclairage HB,ADB,RW selon la deuxième fréquence FPS40, du niveau de débit requis NvDbReq pour transmettre les données d'image compressées sur le bus multiplexé CAN,
- comparaison du niveau de débit NvDbReq déterminé avec la valeur seuil de débit NvDb0 du bus multiplexé CAN,
- transmission au module d'éclairage MOD, via le bus multiplexé CAN, des :
   - données d'image compressées selon la deuxième fréquence FPS40 lorsque le niveau de débit NvDbReq déterminé est inférieur ou égal à la valeur seuil de débit NvDbO, et des
   - données d'image de la dernière image transmise via le bus multiplexé CAN lorsque le niveau de débit NvDbReq déterminé est supérieur à la valeur seuil de débit NvDb0.

Ainsi, en cas de débit insuffisant sur le bus multiplexé CAN pour passer les données d'image compressées selon la deuxième fréquence FPS40, il est prévu de continuer à diffuser les données d'image de la dernière image affichée afin d'assurer que la source de lumière maintiendra en fonctionnement au moins une fonction d'éclairage, et ce pour la sécurité du conducteur et des autres usagers de la route.

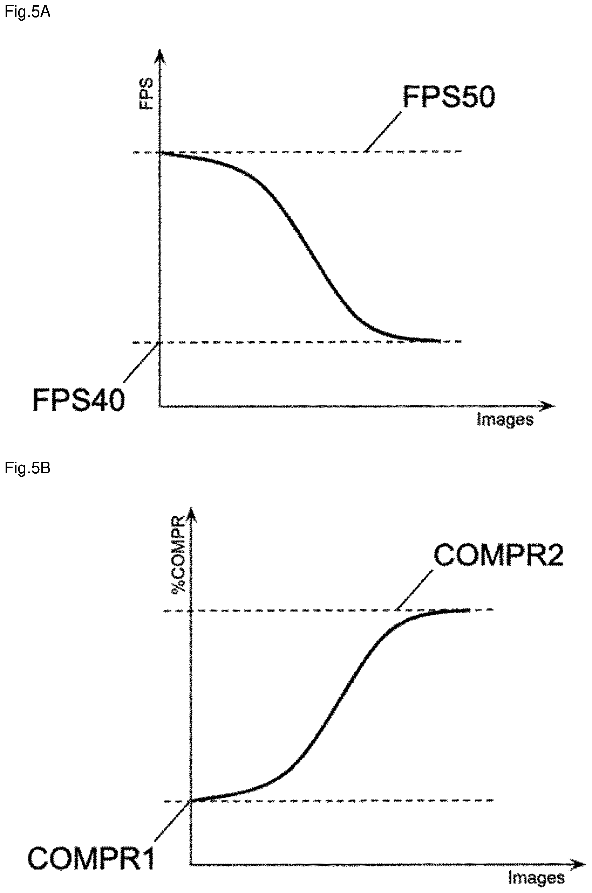

On se réfère maintenant aux Fig.5A et Fig.5B qui montrent le résultat sur le taux de compression obtenu grâce au changement de fréquence lorsque le procédé conforme à l'invention est utilisé. En limitant la fréquence d'affichage, c'est-à-dire en passant la fréquence d'affichage de la fonction à afficher d'une première valeur FPS50 à une deuxième valeur FPS40 qui est moindre, le nombre de données d'image à compresser est réduit. De ce fait, le taux compression total COMPR1 requis (sur l'ensemble d'image par seconde) pour la première fréquence d'affichage FPS50 peut être amélioré, et passer à une valeur de taux de compression COMPR2 plus élevée que COMPR1.

Grâce au procédé, il est alors possible de :
- diminuer le nombre de données d'image à communiquer via le bus multiplexé,
- conserver un niveau élevé de compression des données d'image tout en respectant la largeur de bande maximale autorisée,
- conserver une bonne qualité d'image, sans avoir par exemple à la dégrader par l'intermédiaire d'une nouvelle compression des données d'image déjà compressées, pour réussir à respecter le débit maximal du bus multiplexé,
- assurer la transmission de données d'image haute définition sur le bus multiplexé en ne pénalisant que temporairement la fluidité d'affichage de la fonction d'éclairage.

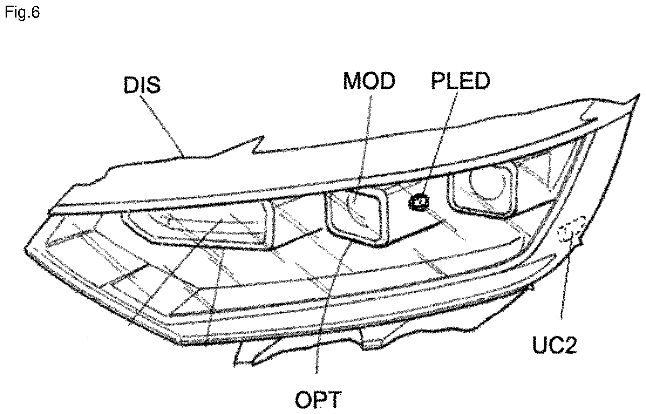

On se réfère maintenant à la Fig.6 qui montre un dispositif d'éclairage DIS de véhicule de type projecteur avant, ce dispositif d'éclairage DIS comprenant :
- le module d'éclairage MOD comprenant au moins une source de lumière PLED ;
- une optique OPT associée à la source de lumière PLED pour générer des faisceaux lumineux de fonctions d'éclairage souhaitées ;
- l'unité de commande UC2 pour effectuer les étapes de réception et décompression des données d'image compressées.

L'invention a été décrite en référence à des modes de réalisations particuliers qui ne sont pas limitatifs. Bien entendu, la présente invention ne se limite pas à la forme de réalisation décrite à titre d'exemple et elle s'étend à d'autres variantes.

Par exemple, l'invention pourrait s'appliquer également pour un système d'éclairage comprenant au moins un feu arrière de véhicule et/ou un feux de signalisation de véhicule et/ou un module d'éclairage intérieur de véhicule, en vue de faire générer les fonctions d'éclairage qui leur sont associées tout en bénéficiant des avantages proposés et obtenus par l'invention, par la technique de compression de données d'image selon une fréquence d'affichage dynamique.

## Revendications

1. Procédé de gestion de données d'image dans un système d'éclairage de véhicule (SYS), le système d'éclairage comprenant :
- au moins un module d'éclairage (MOD) apte à projeter des fonctions d'éclairage à partir de données d'image compressées, et
- un bus multiplexé de type protocole CAN ou CAN-FD (CAN) pour la transmission de données d'image compressées audit au moins un module d'éclairage (MOD), le procédé comprenant les étapes suivantes :
- réception d'une instruction de déclenchement d'au moins une fonction d'éclairage (HB,ADB,RW), **caractérisé en ce que** ladite au moins une fonction d'éclairage (HB,ADB,RW) est configurée pour être générée par ledit au moins un module d'éclairage (MOD) à partir de données d'image compressées correspondant à des motifs d'éclairage affichés dans une plage de fréquences donnée (FPSRg), et **caractérisé en ce que** le procédé comprend les étapes suivantes:
- détermination, pour la génération de l'au moins une fonction d'éclairage (HB,ADB,RW) selon une première fréquence (FPS50) choisie dans ladite plage de fréquence (FPSRg), d'un niveau de débit requis (NvDbReq) pour transmettre les données d'image compressées sur ledit bus multiplexé (CAN),
- comparaison du niveau de débit (NvDbReq) déterminé avec une valeur seuil de débit (NvDbO) du bus multiplexé (CAN), compression des données d'image de l'au moins une fonction d'éclairage (HB,ADB,RW) selon :
• ladite première fréquence (FPS50) lorsque le niveau de débit (NvDbReq) déterminé est inférieur ou égal à ladite valeur seuil de débit (NvDbO), et selon
• une deuxième fréquence (FPS40) choisie dans ladite plage de fréquence (FPSRg) de sorte que la deuxième fréquence (FPS40) est inférieure à la première fréquence (FPS50), lorsque le niveau de débit (NvDbReq) déterminé est supérieur à ladite valeur seuil de débit (NvDbO),
- transmission audit au moins un module d'éclairage (MOD), via ledit bus multiplexé (CAN), des données d'image compressées et aptes à obtenir une succession d'images affichées à l'une des première (FPS50) et deuxième fréquence (FPS40) pour génération de l'au moins une fonction d'éclairage (HB, ADB, RW).

2. Procédé selon la revendication précédente, dans lequel la plage de fréquences donnée (FPSRg) est comprise entre 10 Hz et 120 Hz.

3. Procédé selon la revendication précédente, dans lequel ladite première fréquence est choisie entre 50 Hz et 60 Hz et la deuxième fréquence est choisie entre 30 Hz et 40 Hz.

4. Procédé selon l'une des revendications précédentes, dans lequel la compression des données d'image de l'au moins une fonction d'éclairage (HB,ADB,RW) est effectuée avec un taux de compression supérieur ou égal à 75%.

5. Procédé selon l'une des revendications précédentes, dans lequel l'au moins une fonction d'éclairage est au moins une fonction lumineuse choisie parmi feux de route (HB), feux de route évolutifs (ADB) et marquage au sol (RW).

6. Procédé selon la revendication précédente, dans lequel plusieurs fonctions d'éclairage peuvent être générées en simultané par le système d'éclairage (SYS).

7. Procédé selon l'une des revendications précédentes, dans lequel suite à l'étape de compression des données d'image, lorsque les données d'image sont compressées selon la deuxième fréquence (FPS40), le procédé comprend en outre des étapes de :
- détermination, pour la génération de l'au moins une fonction d'éclairage (HB,ADB,RW) selon la deuxième fréquence (FPS40), du niveau de débit requis (NvDbReq) pour transmettre les données d'image compressées sur ledit bus multiplexé (CAN),
- comparaison du niveau de débit (NvDbReq) déterminé avec la valeur seuil de débit (NvDbO) du bus multiplexé (CAN),
- transmission audit au moins un module d'éclairage (MOD), via ledit bus multiplexé (CAN), des :
• données d'image compressées selon la deuxième fréquence (FPS40) lorsque le niveau de débit (NvDbReq) déterminé est inférieur ou égal à ladite valeur seuil de débit (NvDbO), et des
• données d'image de la dernière image transmise via ledit bus multiplexé (CAN) lorsque le niveau de débit (NvDbReq) déterminé est supérieur à ladite valeur seuil de débit (NvDbO).

8. Système d'éclairage de véhicule (SYS) comprenant :
- au moins un module d'éclairage (MOD) apte à projeter des fonctions d'éclairage à partir de données d'image compressées,
- un bus multiplexé (CAN) pour la transmission de données d'image compressées audit au moins un module d'éclairage (MOD), et
- un système de commande (SC) configuré pour mettre en oeuvre le procédé de gestion de données d'image selon l'une quelconque des revendications précédentes.

9. Système d'éclairage de véhicule (SYS) selon la revendication précédente, dans lequel le système de commande (SC) comprend : une première unité de commande (UC1) munie d'une unité de processeur (PROC1) configurée pour :
• compresser des données d'image selon l'une des première (FPS50) et deuxième fréquence (FPS40) pour génération de l'au moins une fonction d'éclairage (HB,ADB,RW),
• transmettre audit au moins un module d'éclairage (MOD), via ledit bus multiplexé (CAN), les données d'image compressées, une deuxième unité de commande (UC2) munie d'une unité de processeur (PROC2) configurée pour :
• recevoir des données d'image compressées transmises via ledit bus multiplexé (CAN),
• décompresser les données d'image reçues,
• générer l'au moins une fonction d'éclairage (HB,ADB,RW) selon l'une des première (FPS50) et deuxième fréquence (FPS40) à partir des données d'image reçues et décompressées .

10. Système d'éclairage de véhicule (SYS) selon l'une des revendications 8 ou 9, dans lequel l'au moins un module d'éclairage (MOD) comprend au moins une source de lumière à semi-conducteurs (PLED), telles que des LED, et en particulier une source LED pixélisée.

## Patentansprüche

1. Verfahren zur Verwaltung von Bilddaten in einem Fahrzeugbeleuchtungssystem (SYS), wobei das Beleuchtungssystem enthält:
- mindestens ein Beleuchtungsmodul (MOD), das fähig ist, Beleuchtungsfunktionen ausgehend von komprimierten Bilddaten zu projizieren, und
- einen gemultiplexten Bus des Typs CAN- oder CAN-FD-Protokoll (CAN) für die Übertragung von komprimierten Bilddaten an das mindestens eine Beleuchtungsmodul (MOD),
wobei das Verfahren die folgenden Schritte enthält:
- Empfang einer Auslöseanweisung mindestens einer Beleuchtungsfunktion (HB, ADB, RW),
**dadurch gekennzeichnet, dass** die mindestens eine Beleuchtungsfunktion (HB, ADB, RW) konfiguriert ist, vom mindestens einen Beleuchtungsmodul (MOD) ausgehend von komprimierten Bilddaten erzeugt zu werden, die in einem gegebenen Frequenzbereich (FPSRg) angezeigten Beleuchtungsmustern entsprechen, und **dadurch gekennzeichnet, dass** das Verfahren die folgenden Schritte enthält:
- Bestimmung, für die Erzeugung der mindestens einen Beleuchtungsfunktion (HB, ADB, RW) gemäß einer im Frequenzbereich (FPSRg) ausgewählten ersten Frequenz (FPS50), eines erforderlichen Durchsatzniveaus (NvDbReq), um die komprimierten Bilddaten auf dem gemultiplexten Bus (CAN)zu übertragen,
- Vergleich des bestimmten Durchsatzniveaus (NvDbReq) mit einem Durchsatzschwellwert (NvDbO) des gemultiplexten Busses (CAN), Komprimierung der Bilddaten der mindestens einen Beleuchtungsfunktion (HB,ADB,RW) gemäß:
• der ersten Frequenz (FPS50), wenn das bestimmte Durchsatzniveau (NvDbReq) niedriger ist als der oder gleich dem Durchsatzschwellwert (NvDbO), und gemäß
• einer zweiten Frequenz (FPS40), die derart im Frequenzbereich (FPSRg) gewählt wird, dass die zweite Frequenz (FPS40) niedriger ist als die erste Frequenz (FPS50), wenn das bestimmte Durchsatzniveau (NvDbReq) höher ist als der Durchsatzschwellwert (NvDbO),
- Übertragung über den gemultiplexten Bus (CAN) an das mindestens eine Beleuchtungsmodul (MOD) der Bilddaten, die komprimiert und fähig sind, eine Folge von Bildern zu erhalten, die mit einer der ersten (FPS50) und zweiten Frequenzen (FPS40) angezeigt werden, zur Erzeugung der mindestens einen Beleuchtungsfunktion (HB, ADB, RW).

2. Verfahren nach dem vorhergehenden Anspruch, wobei der gegebene Frequenzbereich (FPSRg) zwischen 10 Hz und 120 Hz liegt.

3. Verfahren nach dem vorhergehenden Anspruch, wobei die erste Frequenz zwischen 50 Hz und 60 Hz gewählt wird und die zweite Frequenz zwischen 30 Hz und 40 Hz gewählt wird.

4. Verfahren nach einem der vorhergehenden Ansprüche, wobei die Komprimierung der Bilddaten der mindestens einen Beleuchtungsfunktion (HB, ADB, RW) mit einer Komprimierungsrate größer als oder gleich 75% ausgeführt wird.

5. Verfahren nach einem der vorhergehenden Ansprüche, wobei die mindestens eine Beleuchtungsfunktion mindestens eine Lichtfunktion ist, die ausgewählt wird unter Fernlicht (HB), adaptivem Fernlicht (ADB) und Markierung am Boden (RW).

6. Verfahren nach dem vorhergehenden Anspruch, wobei mehrere Beleuchtungsfunktionen gleichzeitig vom Beleuchtungssystem (SYS) erzeugt werden können.

7. Verfahren nach einem der vorhergehenden Ansprüche, wobei nach dem Schritt der Komprimierung der Bilddaten, wenn die Bilddaten gemäß der zweiten Frequenz (FPS40) komprimiert werden, das Verfahren außerdem Schritte enthält:
- der Bestimmung, für die Erzeugung der mindestens einen Beleuchtungsfunktion (HB, ADB, RW) gemäß der zweiten Frequenz (FPS40), des erforderlichen Durchsatzniveaus (NvDbReq), um die komprimierten Bilddaten auf dem gemultiplexten Bus (CAN) zu übertragen,
- des Vergleichs des bestimmten Durchsatzniveaus (NvDbReq) mit dem Durchsatzschwellwert (NvDbO) des gemultiplexten Busses (CAN),
- der Übertragung an das mindestens eine Beleuchtungsmodul (MOD) über den gemultiplexten Bus (CAN):
• der gemäß der zweiten Frequenz (FPS40) komprimierten Bilddaten, wenn das bestimmte Durchsatzniveau (NvDbReq) niedriger ist als der oder gleich dem Durchsatzschwellwert (NvDbO), und
• der Bilddaten des letzten über den gemultiplexten Bus (CAN) übertragenen Bilds, wenn das bestimmte Durchsatzniveau (NvDbReq) höher ist als der Durchsatzschwellwert (NvDbO).

8. Fahrzeugbeleuchtungssystem (SYS), das enthält:
- mindestens ein Beleuchtungsmodul (MOD), das fähig ist, Beleuchtungsfunktionen ausgehend von komprimierten Bilddaten zu projizieren,
- einen gemultiplexten Bus (CAN) für die Übertragung von komprimierten Bilddaten an das mindestens eine Beleuchtungsmodul (MOD), und
- ein Steuersystem (SC), das konfiguriert ist, das Verwaltungsverfahren von Bilddaten nach einem der vorhergehenden Ansprüche durchzuführen.

9. Fahrzeugbeleuchtungssystem (SYS) nach dem vorhergehenden Anspruch, wobei das Steuersystem (SC) enthält:
eine mit einer Prozessoreinheit (PROC1) versehene erste Steuereinheit (UC1), die konfiguriert ist:
• Bilddaten gemäß einer der ersten (FPS50) und zweiten Frequenzen (FPS40) zur Erzeugung der mindestens einen Beleuchtungsfunktion (HB, ADB, RW) zu komprimieren,
• die komprimierten Bilddaten über den gemultiplexten Bus (CAN) an das mindestens eine Beleuchtungsmodul (MOD) zu übertragen,
eine mit einer Prozessoreinheit (PROC2) versehene zweite Steuereinheit (UC2), die konfiguriert ist:
• über den gemultiplexten Bus (CAN) übertragene komprimierte Bilddaten zu empfangen,
• die empfangenen Bilddaten zu dekomprimieren,
• ausgehend von den empfangenen und dekomprimierten Bilddaten die mindestens eine Beleuchtungsfunktion (HB, ADB, RW) gemäß einer der ersten (FPS50) und zweiten Frequenzen (FPS40) zu erzeugen.

10. Fahrzeugbeleuchtungssystem (SYS) nach einem der Ansprüche 8 oder 9, wobei das mindestens eine Beleuchtungsmodul (MOD) mindestens eine Lichtquelle mit Halbleitern (PLED) wie LEDs enthält, und insbesondere eine verpixelte LED-Quelle.

## Claims

1. A method for managing image data in a vehicle lighting system (SYS), the lighting system comprising:
- at least one lighting module (MOD) capable of projecting lighting functions on the basis of compressed image data, and
- a multiplexed bus CAN or CAN-FD protocol (CAN) for transmitting compressed image data to said at least one lighting module (MOD),
the method comprising the following steps:
- receiving an instruction to trigger at least one lighting function (HB, ADB, RW), **characterized in that** said at least one lighting function (HB, ADB, RW) is configured to be generated by the at least one lighting module (MOD) from compressed image data corresponding to lighting patterns displayed in a given frequency range (FPSRg), and **characterized in that** the method comprises the following steps:
- determining, for the generation of at least one lighting function (HB, ADB, RW) at a first frequency (FPS50) chosen in said frequency range (FPSRg), a bit rate level (NvDbReq) required to transmit the compressed image data over said multiplexed bus (CAN),
- comparing the determined bit rate level (NvDbReq) with a bit rate threshold value (NvDbO) of the multiplexed bus (CAN), compressing the image data of the at least one lighting function (HB, ADB, RW) at:
• said first frequency (FPS50) when the determined bit rate level (NvDbReq) is lower than or equal to said bit rate threshold value (NvDbO), and at
• a second frequency (FPS40) chosen in said frequency range (FPSRg) such that the second frequency (FPS40) is lower than the first frequency (FPS50), when the determined bit rate level (NvDbReq) is greater than said bit rate threshold value (NvDbO),
- transmitting the image data compressed at one of the first (FPS50) and second (FPS40) frequencies to said at least one lighting module (MOD) via said multiplexed bus (CAN) in order for the at least one lighting function (HB, ADB, RW) to be generated.

2. The method as claimed in the preceding claim, wherein the given frequency range (FPSRg) is between 10 Hz and 120 Hz.

3. The method as claimed in the preceding claim, wherein said first frequency is chosen between 50 Hz and 60 Hz and the second frequency is chosen between 30 Hz and 40 Hz.

4. The method as claimed in one of the preceding claims, wherein the compression of the image data of the at least one lighting function (HB, ADB, RW) is performed at a compression rate greater than or equal to 75%.

5. The method as claimed in one of the preceding claims, wherein the at least one lighting function is at least one lighting function chosen from among high beam (HB), adaptive driving beam (ADB) and road writing (RW).

6. The method as claimed in the preceding claim, wherein multiple lighting functions may be generated simultaneously by the lighting system (SYS).

7. The method as claimed in one of the preceding claims, wherein following the step of compressing the image data, when the image data are compressed at the second frequency (FPS40),
the method further comprising the following steps:
- determining, for the generation of the at least one lighting function (HB, ADB, RW) at the second frequency (FPS40), a bit rate level (NvDbReq) required to transmit the compressed image data over said multiplexed bus (CAN),
- comparing the determined bit rate level (NvDbReq) with the bit rate threshold value (NvDbO) of the multiplexed bus (CAN),
- transmitting, to said at least one lighting module (MOD) via said multiplexed bus (CAN):
• image data compressed at the second frequency (FPS40) when the determined bit rate level (NvDbReq) is lower than or equal to said bit rate threshold value (NvDbO), and
• image data of the last image transmitted via said multiplexed bus (CAN) when the determined bit rate level (NvDbReq) is greater than said bit rate threshold value (NvDb0).

8. A vehicle lighting system (SYS) comprising:
- at least one lighting module (MOD) capable of projecting lighting functions on the basis of compressed image data,
- a multiplexed bus (CAN) for transmitting compressed image data to said at least one lighting module (MOD), and
- a control system (SC) configured to implement the method for managing image data as claimed in any one of the preceding claims.

9. The vehicle lighting system (SYS) as claimed in the preceding claim, wherein the control system (SC) comprises:
- a first control unit (UC1), provided with a processor unit (PROC1), configured to:
• compress image data according to one of the first (FPS50) and second (FPS40) frequencies for generating the at least one lighting function (HB, ADB, RW),
• transmit, to said at least one lighting module (MOD) via said multiplexed bus (CAN), the compressed image data,
- a second control unit (UC2), provided with a processor unit (PROC2), configured to:
• receive compressed image data that are transmitted via said multiplexed bus (CAN),
• decompress the received image data,
• generate the at least one lighting function (HB, ADB, RW) according to one of the first (FPS50) and second (FPS40) frequencies from the received and decompressed image data.

10. The vehicle lighting system (SYS) as claimed in one of claims 8 and 9, wherein the at least one lighting module (MOD) comprises at least one semiconductor light source (PLED), such as LEDs, and in particular a pixelated LED source.
